# EUROPEAN PATENT APPLICATION

(11) **EP 3 754 563 A1**
(43) Date of publication of application: **23.12.2020**
(21) Application number: 20166261.6
(22) Date of filing: 27.03.2020
(51) Int. Cl.: G06N 3/08, G06N 3/063, G06N 7/00, G06N 3/04

(54) **TECHNOLOGIES FOR PERFORMING IN-MEMORY TRAINING DATA AUGMENTATION FOR ARTIFICIAL INTELLIGENCE**

(30) Priority: 21.06.2019 US 201916448021
(71) Applicant: INTEL Corporation, Santa Clara, CA 95054 (US)
(72) Inventor: TUREK, Javier S., Santa Clara, California 95054 (US); SENGUPTA, Dipanjan, Santa Clara, California 95054 (US); KHAN, Jawad B., Santa Clara, California 95054 (US); WILLKE, Theodore L., Santa Clara, California 95054 (US)
(74) Representative: Rummler, Felix

(57) **Abstract**

Technologies for performing in-memory training data augmentation for artificial intelligence include a memory comprising media access circuitry connected to a memory media. The media access circuitry is to obtain an input training data set that includes an initial amount of data samples that are usable to train a neural network. The media access circuitry is further to produce, from the input training data set, an augmented training data set with more data samples than the input training data set.

## Description

### BACKGROUND

The process to train a neural network (NN) (e.g., a data structure and corresponding algorithms modeled on a human brain that learns to perform tasks, such as making inferences, by analyzing training samples) typically includes an initial data preprocessing step that has two objectives. First, the preprocessing step prepares the data in a format that matches an input format usable by the the neural network to be trained. Second, the preprocessing step augments the data to deal with overfitting (e.g., a condition in which a neural network is so closely fitted to the training set that it is difficult to generalize and make predictions for new data). The preprocessing step is referred as the "data augmentation" process and generates random variations of the original input data to virtually increase the number of data samples for training. The input data set that is augmented and used for training the neural network typically resides in a data storage device, such as a solid state drive (SSD), and transferring data between the data storage device and a processor (e.g., a general purpose processor) or accelerator device (e.g., a graphics processing unit (GPU)) that is to perform the data augmentation and/or training is time and energy intensive.

### BRIEF DESCRIPTION OF THE DRAWINGS

The concepts described herein are illustrated by way of example and not by way of limitation in the accompanying figures. For simplicity and clarity of illustration, elements illustrated in the figures are not necessarily drawn to scale. Where considered appropriate, reference labels have been repeated among the figures to indicate corresponding or analogous elements.
FIG. 1 is a simplified diagram of at least one embodiment of a compute device for performing augmentation of training data in memory;
FIG. 2 is a simplified diagram of at least one embodiment of a memory media included in the compute device of FIG. 1;
FIG. 3 is a simplified diagram of at least one embodiment of partitions of the memory media and components of a media access circuitry of a memory included in the compute device of FIG. 1;
FIG. 4 is a simplified diagram of at least one embodiment of a tensor operation that may be performed in the memory of the compute device of FIG. 1;
FIGS. 5-7 are simplified diagrams of at least one embodiment of a method for performing efficient artificial intelligence training that may be performed by the compute device of FIG. 1;
FIG. 8 is a simplified diagram of at least one embodiment of a process flow for performing efficient artificial intelligence training that may be performed by the compute device of FIG. 1; and
FIG. 9 is a simplified diagram of at least one embodiment of a data augmentation flow that may be utilized by the compute device of FIG. 1.

### DETAILED DESCRIPTION OF THE DRAWINGS

While the concepts of the present disclosure are susceptible to various modifications and alternative forms, specific embodiments thereof have been shown by way of example in the drawings and will be described herein in detail. It should be understood, however, that there is no intent to limit the concepts of the present disclosure to the particular forms disclosed, but on the contrary, the intention is to cover all modifications, equivalents, and alternatives consistent with the present disclosure and the appended claims.

References in the specification to "one embodiment," "an embodiment," "an illustrative embodiment," etc., indicate that the embodiment described may include a particular feature, structure, or characteristic, but every embodiment may or may not necessarily include that particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to effect such feature, structure, or characteristic in connection with other embodiments whether or not explicitly described. Additionally, it should be appreciated that items included in a list in the form of "at least one A, B, and C" can mean (A); (B); (C); (A and B); (A and C); (B and C); or (A, B, and C). Similarly, items listed in the form of "at least one of A, B, or C" can mean (A); (B); (C); (A and B); (A and C); (B and C); or (A, B, and C).

The disclosed embodiments may be implemented, in some cases, in hardware, firmware, software, or any combination thereof. The disclosed embodiments may also be implemented as instructions carried by or stored on a transitory or non-transitory machine-readable (e.g., computer-readable) storage medium, which may be read and executed by one or more processors. A machine-readable storage medium may be embodied as any storage device, mechanism, or other physical structure for storing or transmitting information in a form readable by a machine (e.g., a volatile or non-volatile memory, a media disc, or other media device).

In the drawings, some structural or method features may be shown in specific arrangements and/or orderings. However, it should be appreciated that such specific arrangements and/or orderings may not be required. Rather, in some embodiments, such features may be arranged in a different manner and/or order than shown in the illustrative figures. Additionally, the inclusion of a structural or method feature in a particular figure is not meant to imply that such feature is required in all embodiments and, in some embodiments, may not be included or may be combined with other features.

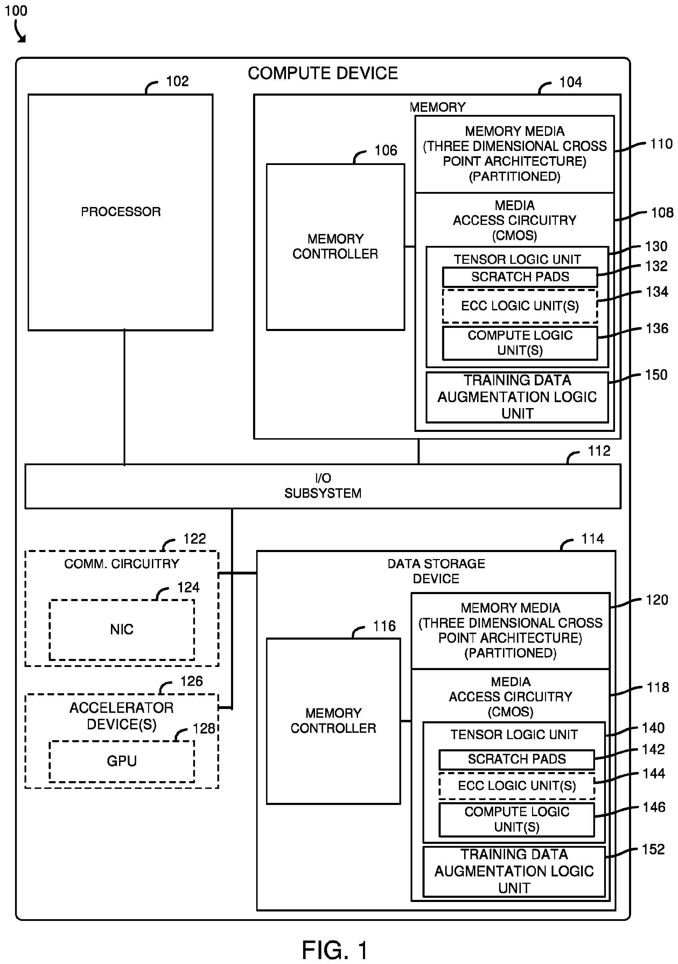

Referring now to FIG. 1, a compute device 100 for performing training data augmentation (e.g., for a neural network) in memory includes a processor 102, a memory 104, an input/output (I/O) subsystem 112, a data storage device 114, communication circuitry 122, and one or more accelerator devices 126. Of course, in other embodiments, the compute device 100 may include other or additional components, such as those commonly found in a computer (e.g., a display, peripheral devices, etc.). Additionally, in some embodiments, one or more of the illustrative components may be incorporated in, or otherwise form a portion of, another component. The term "memory," as used herein in reference to performing training data augmentation and training of a neural network, may refer to the memory 104 and/or the data storage device 114, unless otherwise specified. As explained in more detail herein, media access circuitry 108, 118 (e.g., any circuitry or device configured to access and operate on data in the corresponding memory media 110, 120) connected a corresponding memory media 110, 120 (e.g., any device or material that data is written to and read from) may perform a set of operations (e.g., a pipeline of operations) to augment (e.g., produce variations on data samples in) an input training data set that is to be used to train a neural network. Furthermore, in some embodiments, the media access circuitry 108, 118 may also train the neural network using the augmented training data set. By performing the augmentation of the training data set and, in some embodiments, the training of the neural network in memory (e.g., with the media access circuitry 108, 118) rather than with the processor 102 or an accelerator device 126, the compute device 100 may avoid expending the time and energy that that is typically expended by a compute device to transfer data between the memory (e.g., the memory 104 or the data storage device 114) and the processor or accelerator device(s) to augment a training data set and train a neural network.

The memory media 110, in the illustrative embodiment, has a three dimensional cross point architecture that has data access characteristics that differ from other memory architectures (e.g., dynamic random access memory (DRAM)), such as enabling access to one bit per tile and incurring time delays between reads or writes to the same partition or other partitions. The media access circuitry 108 is configured to make efficient use (e.g., in terms of power usage and speed) of the architecture of the memory media 110, such as by accessing multiple tiles in parallel within a given partition, utilizing scratch pads (e.g., relatively small, low latency memory) to temporarily retain and operate on data read from the memory media 110, and broadcasting data read from one partition to other portions of the memory 104 to enable matrix calculations (e.g., tensor operations) to be performed in parallel within the memory 104. Additionally, in the illustrative embodiment, instead of sending read or write requests to the memory 104 to access matrix data, the processor 102 may send a higher-level request (e.g., a request for a macro operation, such as a request to perform a particular type of matrix calculation, to produce an augmented training data set, to train a neural network) and provide the locations of the input data to be utilized in the requested operation (e.g., an input training data set, a definition of a set of operations that are to be performed to produce an augmented training data set, a location for the augmented training data set to be written, a location of a neural network to be trained). Further, rather than sending back the resulting data to the processor 102, the memory 104 may merely send back an acknowledgement or other indication of status (e.g., "Done"), indicating that the requested operation has been completed. As such, many compute operations, such as artificial intelligence operations (e.g., tensor operations involving matrix calculations) can be performed in memory (e.g., in the memory 104 or in the data storage device 114), with minimal usage of the bus (e.g., the I/O subsystem) to transfer data between components of the compute device 100 (e.g., between the memory 104 or data storage device 114 and the processor 102). In some embodiments the media access circuitry 108 is included in the same die as the memory media 110. In other embodiments, the media access circuitry 108 is on a separate die but in the same package as the memory media 110. In yet other embodiments, the media access circuitry 108 is in a separate die and separate package but on the same dual in-line memory module (DIMM) or board as the memory media 110. While the training data set augmentation is described as being performed by the media access circuitry 108, 118, in some embodiments, the media access circuitry 108, 118 may include a training data augmentation logic unit 150, 152 which may be embodied as any device or circuitry (e.g., an application specific integrated circuit (ASIC), a processor, etc.) configured to offload the training data augmentation operations from the other components of the media access circuitry 108, 118.

The processor 102 may be embodied as any device or circuitry (e.g., a multicore processor(s), a microcontroller, or other processor or processing/controlling circuit) capable of performing operations described herein, such as executing an application (e.g., an artificial intelligence related application that may utilize a neural network or other machine learning structure to learn and make inferences). In some embodiments, the processor 102 may be embodied as, include, or be coupled to an FPGA, an application specific integrated circuit (ASIC), reconfigurable hardware or hardware circuitry, or other specialized hardware to facilitate performance of the functions described herein.

The memory 104, which may include a non-volatile memory (e.g., a far memory in a two-level memory scheme), includes the memory media 110 and the media access circuitry 108 (e.g., a device or circuitry, such as a processor, application specific integrated circuitry (ASIC), or other integrated circuitry constructed from complementary metal-oxide-semiconductors (CMOS) or other materials) underneath (e.g., at a lower location) and coupled to the memory media 110. The media access circuitry 108 is also connected to the memory controller 106, which may be embodied as any device or circuitry (e.g., a processor, a co-processor, dedicated circuitry, etc.) configured to selectively read from and/or write to the memory media 110 in response to corresponding requests (e.g., from the processor 102 which may be executing an artificial intelligence related application that relies on tensor operations to train a neural network and/or to make inferences).

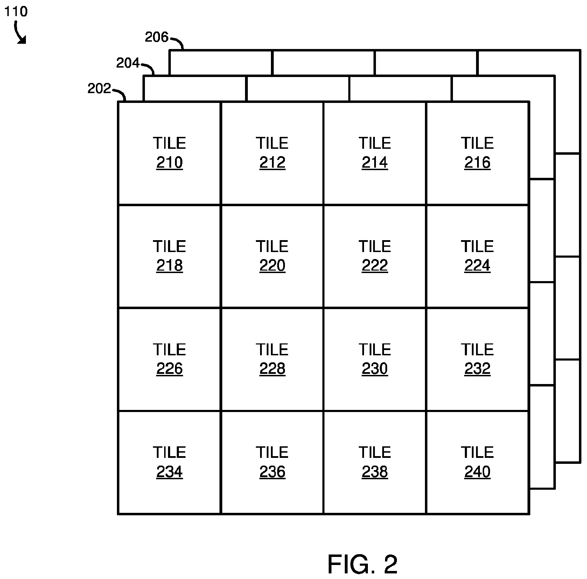

Referring briefly to FIG. 2, the memory media 110, in the illustrative embodiment, includes a tile architecture, also referred to herein as a cross point architecture (e.g., an architecture in which memory cells sit at the intersection of word lines and bit lines and are individually addressable and in which bit storage is based on a change in bulk resistance), in which each memory cell (e.g., tile) 210, 212, 214, 216, 218, 220, 222, 224, 226, 228, 230, 232, 234, 236, 238, 240 is addressable by an x parameter and a y parameter (e.g., a column and a row). The memory media 110 includes multiple partitions, each of which includes the tile architecture. The partitions may be stacked as layers 202, 204, 206 to form a three dimensional cross point architecture (e.g., Intel 3D XPoint™ memory). Unlike typical memory devices, in which only fixed-size multiple-bit data structures (e.g., byte, words, etc.) are addressable, the media access circuitry 108 is configured to read individual bits, or other units of data, from the memory media 110 at the request of the memory controller 106, which may produce the request in response to receiving a corresponding request from the processor 102.

Referring back to FIG. 1, the media access circuitry 108, in the illustrative embodiment, includes a tensor logic unit 130, which may be embodied as any device or circuitry (e.g., CMOS circuitry) configured to offload the performance of tensor operations from other portions of the media access circuitry 108. The tensor logic unit 130, in the illustrative embodiment, includes multiple memory scratch pads 132, each of which may be embodied as any device or circuitry (e.g., static random access memories (SRAMs), register files, etc.) usable to provide relatively fast (e.g., low latency) access to data (e.g., matrix data) that has been read from the memory media 110. In the illustrative embodiment, the scratch pads 132 provide faster read and write access times than the memory media 110 which has comparatively slower access times and a larger capacity. The tensor logic unit 130 may also include an error correction code (ECC) logic unit 134, which may be embodied as any device or circuitry (e.g., reconfigurable circuitry, an ASIC, etc.) configured to perform an error correction algorithm (e.g., a Reed-Solomon algorithm, a Bose-Chaudhuri-Hocquenghem (BCH) algorithm, a low density parity check (LDPC) algorithm, etc.) on data written to and read from the memory media 110 to detect and correct any errors (e.g., due to corruption). Additionally, in the illustrative embodiment, the tensor logic unit 130 includes multiple compute logic units 136 each of which may be embodied as any device or circuitry (e.g., reconfigurable circuitry, ASICs, etc.) configured to perform compute operations on data read from the memory media 110 (e.g., after the ECC logic unit 134 has performed an error correction process on the data).

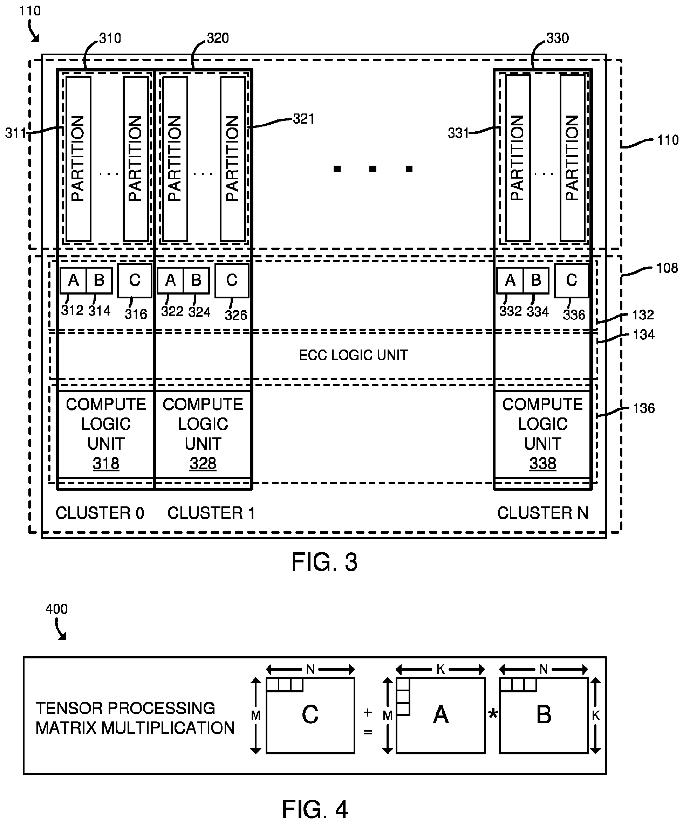

Referring briefly to FIG. 3, in the illustrative embodiment, components of the memory 104 are divided into clusters 310, 320, 330 (e.g., groupings of components). The cluster 310 includes multiple partitions 311 of the memory media 110, a set of scratch pads 312, 314, 316, each similar to the scratch pads 132 of FIG. 1, and a corresponding compute logic unit 318, similar to the compute logic unit 136 of FIG. 1. Similarly, the cluster 320 includes another set of partitions 321 of the memory media 110, a corresponding set of scratch pads 322, 324, 326, and a corresponding compute logic unit 328. The cluster 330 also includes a set of partitions 331 of the memory media 110, a corresponding set of scratch pads 332, 334, 336, and a compute logic unit 338. In the illustrative embodiment, in operation, the compute logic unit 318 reads a subset of matrix data (e.g., one value of an input matrix A from the set of partitions (e.g., partitions 311)) and provides the read data to the ECC logic unit 134 to perform an error correction process to correct any errors in the data. The compute logic unit 318 may additionally write the data (e.g., after the error correction process has been performed) into the corresponding scratch pad 312 and may broadcast that same subset of the matrix data to the corresponding scratch pads of the other clusters (e.g., to the scratch pads 322, 332). Similarly, the compute logic unit 328 may read, from the corresponding set of partitions 321 another subset of the matrix data (e.g., another value of the input matrix A) into the corresponding scratch pad 322, utilizing the ECC logic unit 134 to correct any errors, and broadcast that subset of the matrix data to the other scratch pads that are to store data for that matrix (e.g., to the scratch pads 312, 332). The compute logic unit 338 may perform similar operations.

By broadcasting, to the other scratch pads, matrix data that has been read from a corresponding set of partitions of the memory media 110, the media access circuitry 108 reduces the number of times that a given section (e.g., set of partitions) of the memory media 110 must be accessed to obtain the same matrix data (e.g., the read matrix data may be broadcast to multiple scratch pads after being read from the memory media 110 once, rather than reading the same matrix data from the memory media 110 multiple times). Further, by utilizing multiple compute logic units 318, 328, 338 that are each associated with corresponding scratch pads 312, 314, 316, 322, 224, 226, 232, 234, 236, the media access circuitry 108 may perform the portions of a tensor operation (e.g., matrix multiply and accumulate) concurrently (e.g., in parallel). It should be understood that while three clusters 310, 320, 330 are shown in FIG. 3 for simplicity, the actual number of clusters and corresponding partitions, scratch pads, and compute logic units may differ depending on the particular embodiment.

Referring briefly to FIG. 4, an example of a matrix multiplication (e.g., matrix multiply and accumulate) operation 400 that may be performed by the memory 104 is shown. As illustrated, matrix data in an input matrix A is multiplied by matrix data in another matrix B (e.g., weight data for a layer of a convolutional neural network) and the resultant data is written to the output matrix C. Each matrix represented in FIG. 4 is temporarily stored as matrix data in the scratch pads 132 of the media access circuitry 108. In some embodiments, the output matrix C may be utilized as an input matrix for a subsequent tensor operation (e.g., as an input matrix for a subsequent layer of a convolutional neural network).

Referring back to FIG. 1, the memory 104 may include non-volatile memory and volatile memory. The non-volatile memory may be embodied as any type of data storage capable of storing data in a persistent manner (even if power is interrupted to the non-volatile memory). For example, the non-volatile memory may be embodied as one or more non-volatile memory devices. The non-volatile memory devices may include one or more memory devices configured in a cross point architecture that enables bit-level addressability (e.g., the ability to read from and/or write to individual bits of data, rather than bytes or other larger units of data), and are illustratively embodied as three dimensional (3D) cross point memory. In some embodiments, the non-volatile memory may additionally include other types of memory, including any combination of memory devices that use chalcogenide phase change material (e.g., chalcogenide glass), ferroelectric transistor random-access memory (FeTRAM), nanowire-based non-volatile memory, phase change memory (PCM), memory that incorporates memristor technology, Magnetoresistive random-access memory (MRAM) or Spin Transfer Torque (STT)-MRAM. The volatile memory may be embodied as any type of data storage capable of storing data while power is supplied volatile memory. For example, the volatile memory may be embodied as one or more volatile memory devices, and is periodically referred to hereinafter as volatile memory with the understanding that the volatile memory may be embodied as other types of non-persistent data storage in other embodiments. The volatile memory may have an architecture that enables bit-level addressability, similar to the architecture described above.

The processor 102 and the memory 104 are communicatively coupled to other components of the compute device 100 via the I/O subsystem 112, which may be embodied as circuitry and/or components to facilitate input/output operations with the processor 102 and/or the main memory 104 and other components of the compute device 100. For example, the I/O subsystem 112 may be embodied as, or otherwise include, memory controller hubs, input/output control hubs, integrated sensor hubs, firmware devices, communication links (e.g., point-to-point links, bus links, wires, cables, light guides, printed circuit board traces, etc.), and/or other components and subsystems to facilitate the input/output operations. In some embodiments, the I/O subsystem 112 may form a portion of a system-on-a-chip (SoC) and be incorporated, along with one or more of the processor 102, the main memory 104, and other components of the compute device 100, in a single chip.

The data storage device 114 may be embodied as any type of device configured for short-term or long-term storage of data such as, for example, memory devices and circuits, memory cards, hard disk drives, solid-state drives, or other data storage device. In the illustrative embodiment, the data storage device 114 includes a memory controller 116, similar to the memory controller 106, memory media 120 (also referred to as "storage media"), similar to the memory media 110, and media access circuitry 118, similar to the media access circuitry 108, including a tensor logic unit 140, similar to the tensor logic unit 130, scratch pads 142, similar to the scratch pads 132, an ECC logic unit 144, similar to the ECC logic unit 134, compute logic units 146, similar to the compute logic units 136, and a training data augmentation logic unit 152, similar to the training data augmentation logic unit 150. The data storage device 114 may include a system partition that stores data and firmware code for the data storage device 114 and one or more operating system partitions that store data files and executables for operating systems.

The communication circuitry 122 may be embodied as any communication circuit, device, or collection thereof, capable of enabling communications over a network between the compute device 100 and another device. The communication circuitry 122 may be configured to use any one or more communication technology (e.g., wired or wireless communications) and associated protocols (e.g., Ethernet, Bluetooth®, Wi-Fi®, WiMAX, etc.) to effect such communication.

The illustrative communication circuitry 122 includes a network interface controller (NIC) 124, which may also be referred to as a host fabric interface (HFI). The NIC 124 may be embodied as one or more add-in-boards, daughter cards, network interface cards, controller chips, chipsets, or other devices that may be used by the compute device 100 to connect with another compute device. In some embodiments, the NIC 124 may be embodied as part of a system-on-a-chip (SoC) that includes one or more processors, or included on a multichip package that also contains one or more processors. In some embodiments, the NIC 124 may include a local processor (not shown) and/or a local memory (not shown) that are both local to the NIC 124. In such embodiments, the local processor of the NIC 124 may be capable of performing one or more of the functions of the processor 102. Additionally or alternatively, in such embodiments, the local memory of the NIC 124 may be integrated into one or more components of the compute device 100 at the board level, socket level, chip level, and/or other levels.

The one or more accelerator devices 126 may be embodied as any device(s) or circuitry capable of performing a set of operations faster than the general purpose processor 102. For example, the accelerator device(s) 126 may include a graphics processing unit 128, which may be embodied as any device or circuitry (e.g., a co-processor, an ASIC, reconfigurable circuitry, etc.) capable of performing graphics operations (e.g., matrix operations) faster than the processor 102. In some embodiments, the accelerator device(s) 126 may be usable to train a neural network using an augmented training data set that was produced in memory (e.g., in the memory 104 or in the data storage device 114).

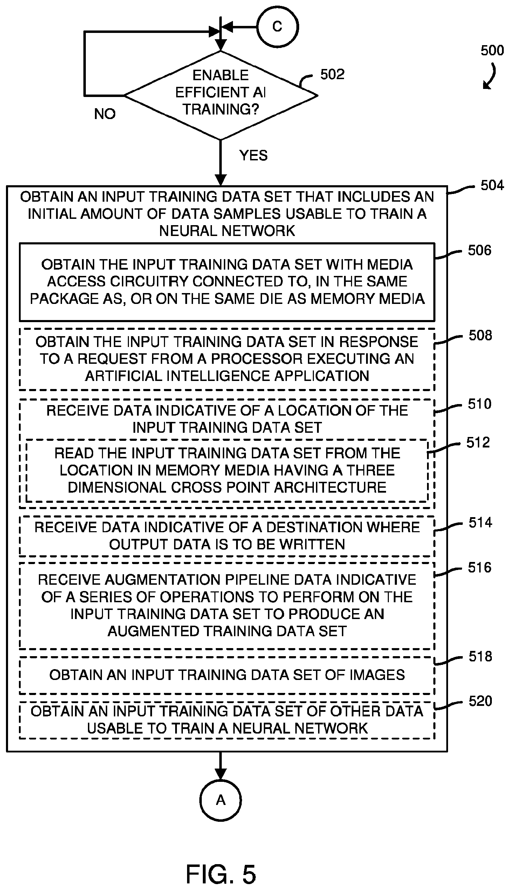

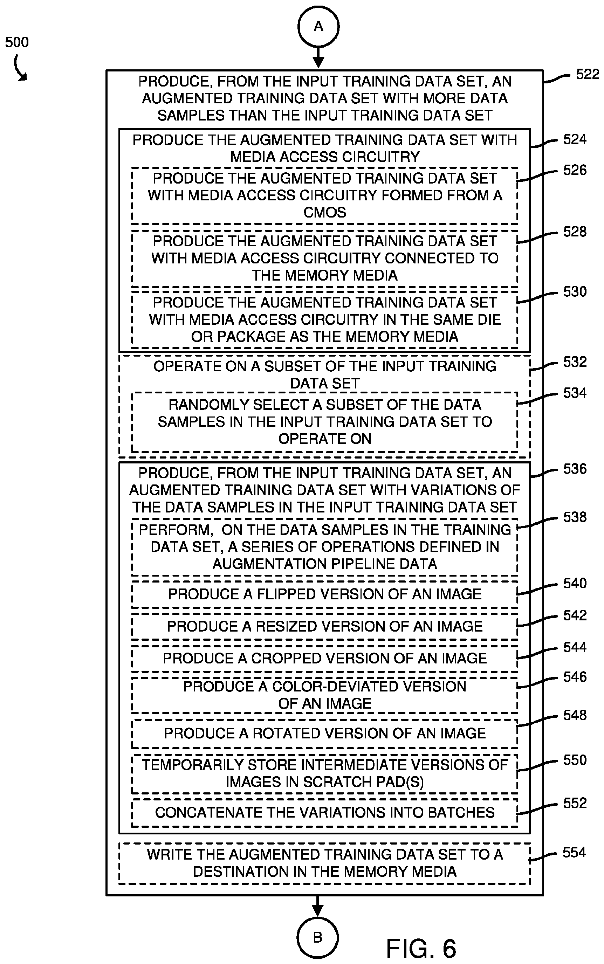

Referring now to FIG. 5, the compute device 100, in operation, may execute a method 500 for performing efficient artificial intelligence training. The method 500 is described with reference to the data storage device 114. However, it should be understood that the method 500 could be additionally or alternatively performed using the memory 104. The method 500 begins with block 502 in which the compute device 100 (e.g., the data storage device 114) determines whether to enable efficient artificial intelligence training operations (e.g., augmentation of training data and, in some embodiments, training of a neural network in the data storage device 114). The compute device 100 may enable efficient artificial intelligence training operations in response to a determination that the training data augmentation logic unit 152 is present in the data storage device 114 (e.g., in the media access circuitry 118), in response to a determination that a configuration setting (e.g., in a configuration file) indicates to enable efficient artificial intelligence training operations, and/or based on other factors. Regardless, in response to a determination to enable performance of efficient artificial intelligence training operations, the method 500 advances to block 504 in which the compute device 100 (e.g., the data storage device 114) obtains an input training data set that includes an initial amount of data samples usable to train a neural network. In doing so, in the illustrative embodiment, the compute device 100 (e.g., the data storage device 114) obtains the input training data set with media access circuitry (e.g., the media access circuitry 118) connected to, in the same package (e.g., semiconductor package) as, or on the same die (e.g., semiconductor die) as memory media (e.g., the memory media 120), as indicated in block 506. As indicated in block 508, the data storage device 114 (e.g., the media access circuitry 118) may obtain the input training data set in response to a request from a processor (e.g., the processor 102) executing an artificial intelligence application (e.g., an application that utilizes a neural network to produce inferences), as indicated in block 508. The data storage device 114 (e.g., the media access circuitry 118) may receive data indicative of a location of the input training data set (e.g., the data storage device 114 may receive the location data as a parameter of the request from block 508), as indicated in block 510. Relatedly, and as indicated in block 512, the data storage device 114 (e.g., the media access circuitry 118), may read the input training data set from the location in the memory media (e.g., in the memory media 120), which may have a cross point architecture (e.g., an architecture in which memory cells sit at the intersection of word lines and bit lines and are individually addressable and in which bit storage is based on a change in bulk resistance). Further, in the illustrative embodiment, the media access circuitry 118 may read the input training data set from a memory media (e.g., the memory media 120) having a three dimensional cross point architecture (e.g., an architecture in which sets of tiles are stacked as layers, as described with reference to FIG. 2), as indicated in block 512. In other embodiments, the media access circuitry 118 may read the input training data set from a memory media having a different architecture. As indicated in block 514, the data storage device 114 (e.g., the media access circuitry 118) may receive data indicative of a location where output data (e.g., an augmented training data set, a trained neural network, etc.) is to be written (e.g., a location indicated in the request received in block 508). Additionally or alternatively, the data storage device 114 (e.g., the media access circuitry 118) may receive augmentation pipeline data which may be embodied as any data indicative of a series of operations to be performed on the input training data set to produce the augmented training data set, as indicated in block 516. For example, the media access circuitry 118 may receive the augmentation pipeline data in the request from block 508 or may obtain the augmentation pipeline data from another source (e.g., from a predefined location in the memory media 120). As indicated in block 518, in obtaining the input training data set, the data storage device 114 (e.g., the media access circuitry 118) may obtain an input training data set of images (e.g., images of objects to be recognized using a neural network). Alternatively, and as indicated in block 520, the data storage device 114 (e.g., the media access circuitry 118) may obtain an input training data set of other data (e.g., audio samples, such as speech, text, etc.) usable to train a neural network (e.g., to recognize words in the audio samples). In obtaining the input training data set, the data storage device 114 (e.g., the media access circuitry 118) may perform a decompression operation to convert each data sample to a format usable for manipulation of each data sample (e.g., from a Portable Network Graphics (PNG) format or Joint Photographic Experts Group (JPEG) format to a matrix of color values). Subsequently, the method 500 advances to block 522 of FIG. 6, in which the data storage device 114 produces, from the input training data set, an augmented training data set with more data samples than were in the input training data set.

Referring now to FIG. 6, in producing the augmented training data set, the data storage device 114, in the illustrative embodiment, produces the augmented training data set with the media access circuitry 118, as indicated in block 524. As indicated in block 526, the data storage device 114 may produce the augmented training data set with media access circuitry formed from a complementary metal-oxide semiconductor (CMOS) (e.g., the media access circuitry 118 may be formed from a CMOS). As indicated in block 528, the data storage device 114 may produce the augmented training data set with media access circuitry connected to the memory media 120 (e.g., the media access circuitry 118 is connected to the memory media 120). Relatedly, as indicated in block 530, the data storage device 114 may produce the augmented training data set with media access circuitry 118 that is in the same die (e.g., semiconductor die) or package (e.g., semiconductor package) as the memory media 120.

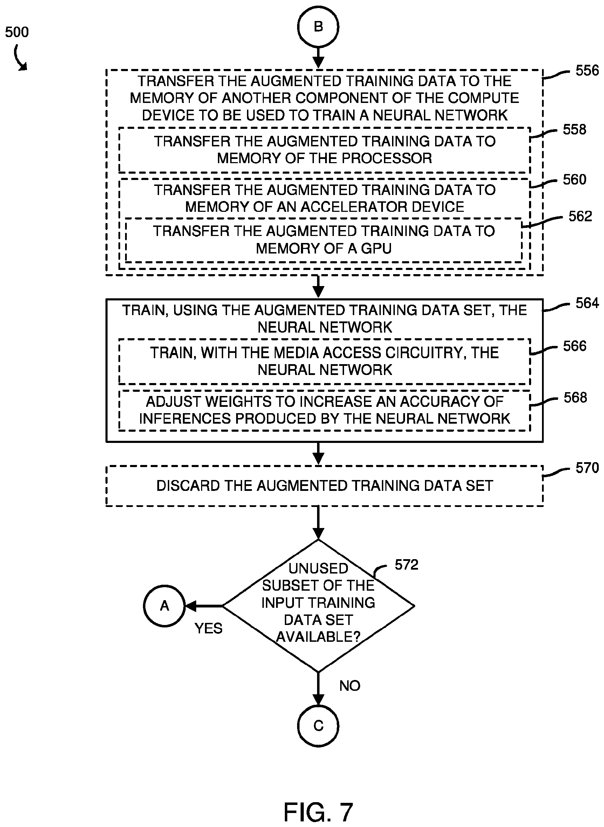

As indicated in block 532, the media access circuitry 118 may operate on a subset of the input training data set. For example, and as indicated in block 534, the media access circuitry may randomly select (e.g., based on a value of a randomly generated number) a subset of the data samples in the input training data to set operate on. As indicated in block 536, the media access circuitry 118 produces, from the input training data set, an augmented training data set with variations (e.g., randomized modifications) of the data samples (e.g., images) in the input training data set. In doing so, and as indicated in block 538, the media access circuitry 118 may perform, on the data samples in the training data set, a series of operations that are defined in augmentation pipeline data (e.g., from block 516 of FIG. 5). As indicated in block 540, the media access circuitry 118 may produce a flipped (e.g., horizontally and/or vertically) version of an image. Additionally or alternatively, the media access circuitry 118 may produce a resized (e.g., enlarged or shrunken) version of an image, as indicated in block 542. In some embodiments, the media access circuitry 118 may produce a cropped version of an image (e.g., by retaining a subsection of the image and discarding the rest of the image), as indicated in block 544. Additionally or alternatively, the media access circuitry 118 may produce a color-deviated version of an image (e.g., by changing the color(s) in one or more portions of the image), as indicated in block 546. As indicated in block 548, the media access circuitry 118 may produce a rotated (e.g., by 90 degrees, 180 degrees, or a different amount) version of an image. In the illustrative embodiment, the media access circuitry 118 may temporarily store intermediate versions (e.g., a version of an image that has had one or more operations in the pipeline performed on it, but one or more additional operations have yet to be performed) of image(s) in scratchpads (e.g., the scratch pads 142) for relatively low-latency access, as indicated in block 550. As indicated in block 552, the media access circuitry 118 may concatenate (e.g., group together) variations of images produced in blocks 540 through 548 in batches (e.g., sets). In some embodiments, the media access circuitry 118 may group together one variation per data sample (e.g., image) for many data samples (e.g., images) from the input training data set. In producing the augmented training data set, the media access circuitry 118 may write the augmented training data set to a destination (e.g., a predefined location, a location specified in a request from the processor 102, such as the location specified in block 514 of FIG. 5, or another location) in the memory media 120, as indicated in block 554. Subsequently, the method 500 advances to block 556 of FIG. 7, in which the data storage device 114 (e.g., the media access circuitry 118) may transfer the augmented training data to a memory of another component of the compute device 100 to be used to train a neural network.

Referring now to FIG. 7, as indicated in block 558, the media access circuitry 118 may transfer the augmented training data to a memory of the processor 102. In other embodiments, the media access circuitry 118 may transfer the augmented training data to a memory of an accelerator device, as indicated in block 560. For example, and as indicated in block 562, the media access circuitry 118 may transfer the augmented training data to a memory of a GPU (e.g., the GPU 128). In other embodiments, the media access circuitry 118 may skip block 556 (e.g., may not transfer the augmented training data out of the memory media 120). As indicated in block 564, the compute device 100 trains, using the augmented training data set, the neural network. In some embodiments, the compute devices 100 trains the neural network using the media access circuitry 118 (e.g., rather than another component of the compute device 100, such as the processor 102 or an accelerator device 126), as indicated in block 566. In such embodiments, by training the neural network in the memory (e.g., in the data storage device 114), the compute device 100 avoids the expense (e.g., time and energy expense) of transferring the augmented training data set to another component to perform training of the neural network. As indicated in block 568, in training the neural network, the compute device 100 (e.g., the media access circuitry 118) may adjust one or more weights used by the neural network to increase an accuracy of inferences produced by the neural network. Subsequently, and as indicated in block 570, the compute device 100 (e.g., the media access circuitry 118) may discard (e.g., delete) the augmented training data set. Afterwards, in block 572, the compute device 100 (e.g., the media access circuitry 118) determines the subsequent course of action based on whether an unused subset of the input training data set is available (e.g., whether only a subset of the input training data set was operated on in block 532 to produce augmented training data and additional samples in the input training data set have not yet been augmented and used to train the neural network). If an unused subset is available, the method 500 loops back to block 522 to produce variations on additional data samples from the input training data set (e.g., to produce an additional augmented training data set) and to subsequently train the neural network based on the resulting augmented training data set. Otherwise, the method 500 loops back to block 502, in which the compute device 100 determines whether to continue to enable efficient artificial intelligence training (e.g., to await another request from the processor 102 produce another augmented training data set for another neural network). While the blocks of the method 500 are shown and described in a particular order, it should be understood that the operations of the method 500 may be performed in a different order and/or concurrently. For example, the data storage device 114 (e.g., the media access circuitry 118) may transfer augmented training data to a memory of another component of the compute device 100 (e.g., to train a neural network) while the media access circuitry 118 augments another subset of the input training data set.

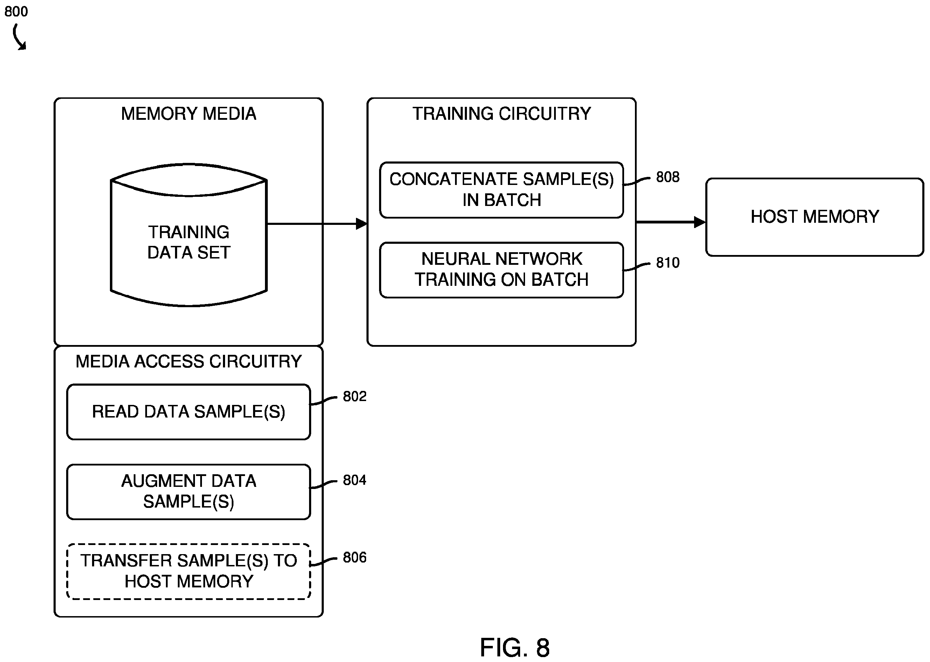

Referring now to FIG. 8, in a process flow 800 for performing efficient artificial intelligence training operations, the media access circuitry 118, in block 802, reads data samples (e.g., the input training data set) from the memory media 120. Subsequently, the media access circuitry 118 augments the data samples (e.g., produces the augmented training data set) in block 804. In some embodiments, after producing the augmented data samples (e.g., the augmented training data set), the media access circuitry 118 may transfer the samples to a memory of the host (e.g., a memory of the processor 102), as indicated in block 806. In other embodiments, the media access circuitry 118 may skip block 806. Subsequently, in block 808, training circuitry of the host (e.g., the compute device 100) concatenates the samples (e.g., the samples in the augmented training data set) into one or more batches. The training circuitry may be the processor 102 or another device (e.g., the GPU 128) if the media access circuitry 118 transferred the samples in block 806. Otherwise, the training circuitry is the media access circuitry 118. In block 810, the training circuitry trains the neural network using the batch of samples from the augmented training data set. The trained neural network may then be retained in the memory of the host (e.g., in a memory usable by the processor 102) to make inferences or perform other operations on behalf of an artificial intelligence application that utilizes the neural network.

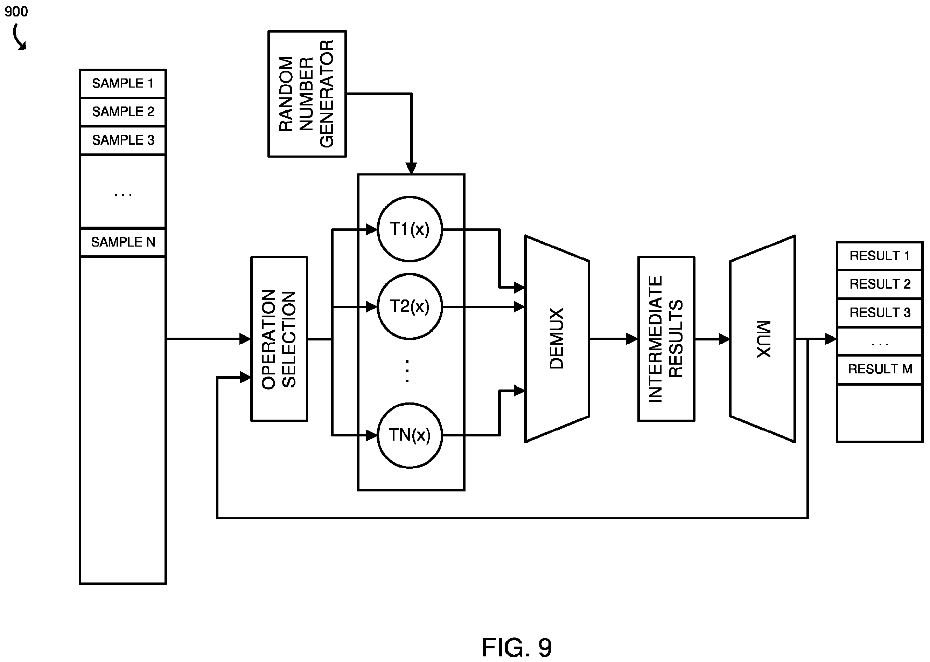

Referring briefly to FIG. 9 in a data augmentation flow 900 illustrative of the blocks performed in the method 500, a data sample is randomly selected from the dataset (e.g., the input training data set) in storage and all the pipeline operations are applied sequentially, storing the partial results and temporary values in SRAM (e.g., the scratch pads 142). A random number generator is sampled for the pipeline operations that require randomness. Results (augmented samples) are transferred to host memory or concatenated for in-device (e.g., by the media access circuitry 118) training of the neural network.

### EXAMPLES

Illustrative examples of the technologies disclosed herein are provided below. An embodiment of the technologies may include any one or more, and any combination of, the examples described below.
Example 1 includes a memory comprising media access circuitry connected to a memory media, wherein the media access circuitry is to obtain an input training data set that includes an initial amount of data samples that are usable to train a neural network; and produce, from the input training data set, an augmented training data set with more data samples than the input training data set.
Example 2 includes the subject matter of Example 1, and wherein the media access circuitry is further to train, with the augmented training data set, the neural network.
Example 3 includes the subject matter of any of Examples 1 and 2, and wherein to produce the augmented training data set comprises to produce, from the input training data set, an augmented training data set with variations of the data samples in the input training data set.
Example 4 includes the subject matter of any of Examples 1-3, and wherein to produce the augmented training data set with variations of the data samples in the input training data set comprises to perform a series of operations defined in augmentation pipeline data on the data samples in the training data set.
Example 5 includes the subject matter of any of Examples 1-4, and wherein the media access circuitry is further to receive the augmentation pipeline data from another component of a compute device in which the memory is located.
Example 6 includes the subject matter of any of Examples 1-5, and wherein to produce an augmented training data set with variations of the data samples in the input training data set comprises to produce a flipped version of an image.
Example 7 includes the subject matter of any of Examples 1-6, and wherein to produce an augmented training data set with variations of the data samples in the input training data set comprises to produce a resized version of an image or to produce a cropped version of an image.
Example 8 includes the subject matter of any of Examples 1-7, and wherein to produce an augmented training data set with variations of the data samples in the input training data set comprises to produce a color-deviated version of an image.
Example 9 includes the subject matter of any of Examples 1-8, and wherein to produce an augmented training data set with variations of the data samples in the input training data set comprises to produce a rotated version of an image.
Example 10 includes the subject matter of any of Examples 1-9, and wherein to produce an augmented training data set with variations of the data samples in the input training data set comprises to temporarily store an intermediate version of an image in a scratch pad of the media access circuitry.
Example 11 includes the subject matter of any of Examples 1-10, and wherein the circuitry is further to concatenate the variations into one or more batches.
Example 12 includes the subject matter of any of Examples 1-11, and wherein to obtain an input training data set comprises to obtain an input training data set that includes audio data samples.
Example 13 includes the subject matter of any of Examples 1-12, and wherein the circuitry is to iteratively produce portions of the augmentation training data set and train the neural network using each iteratively produced portion of the augmentation training data set.
Example 14 includes the subject matter of any of Examples 1-13, and wherein the circuitry is further to transfer the augmented training data set to another component of a compute device to train the neural network.
Example 15 includes the subject matter of any of Examples 1-14, and wherein the media access circuitry is formed from a complementary metal-oxide-semiconductor.
Example 16 includes the subject matter of any of Examples 1-15, and wherein the memory media has a cross point architecture.
Example 17 includes the subject matter of any of Examples 1-16, and wherein the memory media has a three dimensional cross point architecture.
Example 18 includes a method comprising obtaining, by media access circuitry connected to a memory media, an input training data set that includes an initial amount of data samples that are usable to train a neural network; and producing, by the media access circuitry and from the input training data set, an augmented training data set with more data samples than the input training data set.
Example 19 includes the subject matter of Example 18, and further including training, by the media access circuitry and with the augmented training data set, the neural network.
Example 20 includes one or more machine-readable storage media comprising a plurality of instructions stored thereon that, in response to being executed, cause media access circuitry connected to a memory media to obtain an input training data set that includes an initial amount of data samples that are usable to train a neural network; and produce, from the input training data set, an augmented training data set with more data samples than the input training data set.

## Claims

1. A memory comprising:
media access circuitry connected to a memory media, wherein the media access circuitry is to:
obtain an input training data set that includes an initial amount of data samples that are usable to train a neural network; and
produce, from the input training data set, an augmented training data set with more data samples than the input training data set.

2. The memory of claim 1, wherein the media access circuitry is further to train, with the augmented training data set, the neural network.

3. The memory of claim 1, wherein to produce the augmented training data set comprises to produce, from the input training data set, an augmented training data set with variations of the data samples in the input training data set.

4. The memory of claim 3, wherein to produce the augmented training data set with variations of the data samples in the input training data set comprises to perform a series of operations defined in augmentation pipeline data on the data samples in the training data set.

5. The memory of claim 3, wherein to produce an augmented training data set with variations of the data samples in the input training data set comprises to produce: (i) a flipped version of an image, (ii) a resized version of an image or to produce a cropped version of an image, (iii) a color-deviated version of an image, or (iv) a rotated version of an image.

6. The memory of claim 3, wherein to produce an augmented training data set with variations of the data samples in the input training data set comprises to temporarily store an intermediate version of an image in a scratch pad of the media access circuitry.

7. The memory of claim 3, wherein the circuitry is further to concatenate the variations into one or more batches.

8. The memory of claim 1, wherein to obtain an input training data set comprises to obtain an input training data set that includes audio data samples.

9. The memory of claim 1, wherein the circuitry is to iteratively produce portions of the augmentation training data set and train the neural network using each iteratively produced portion of the augmentation training data set.

10. The memory of claim 1, wherein the circuitry is further to transfer the augmented training data set to another component of a compute device to train the neural network.

11. The memory of claim 1, wherein the memory media has a three dimensional cross point architecture.

12. A method comprising:
obtaining, by media access circuitry connected to a memory media, an input training data set that includes an initial amount of data samples that are usable to train a neural network; and
producing, by the media access circuitry and from the input training data set, an augmented training data set with more data samples than the input training data set.

13. The method of claim 12, further comprising:
training, by the media access circuitry and with the augmented training data set, the neural network.

14. One or more machine-readable storage media comprising a plurality of instructions stored thereon that, when executed, causes media access circuitry connected to a memory media to perform the method of any of claims 9-12.

15. Media access circuitry connected to a memory media, the media access circuitry comprising means for performing the method of any of claims 9-12.
